(19) Europäisches Patentamt
European Patent Office
Office européen des brevets

(11) Publication number : **0 610 155 A1**

(12) **EUROPEAN PATENT APPLICATION**

(21) Application number : **94810045.8**

(22) Date of filing : **26.01.94**

(51) Int. Cl.⁵ : **C08K 5/00,** C08K 5/3475, C08K 5/3472

(30) Priority : **04.02.93 US 13443**

(43) Date of publication of application : **10.08.94 Bulletin 94/32**

(84) Designated Contracting States : **DE FR GB IT NL**

(71) Applicant : **CIBA-GEIGY AG
Klybeckstrasse 141
CH-4002 Basel (CH)**

(72) Inventor : **Botkin, James Harold
111 Ridge Avenue
Passaic, NJ 07055 (US)**
Inventor : **Leggio, Andrew Joseph
41 Lexington Avenue
Franklin Square, NY 11010 (US)**

(54) **Stabilized polyamide compositions.**

(57) Polymer compositions which are described comprise
(A) at least one polyamide and
(B) the reaction product of (B-i) at least one copper salt and (B-ii) at least one organic metal complexing agent selected from the group consisting of N-monoacylhydrazine derivatives, N,N'-diacylhydrazine derivatives, tetrazole derivatives, and oxalic acid derivatives.
These reaction products show an ability to stabilize polyamides against radiation damage and thermal degradation.

EP 0 610 155 A1

## Field of the Invention

The present invention relates generally to stabilized polyamide compositions and, in particular, to stabilized polyamide compositions comprising polyamides and complexes of copper salts.

## Background of the Invention

Polyamides, commonly referred to as nylons, are a widely used class of thermoplastic engineering resins characterized by excellent lubricity, wear resistance and chemical resistance. While polyamides provide significant benefits, these resins and related polyamide blends have certain disadvantages. Most notably, polyamides often can undergo degradation on exposure to heat and sun light. Prior to the present invention, polyamides have been stabilized against the deleterious effects of heat and light by the addition of small amounts of copper salts, most often in combination with alkali metal halide salts (see, e.g., U.S. patents 2,630,421 and 2,705,227). However, while inexpensive and very effective, stabilization systems containing copper salts do not provide a complete solution to the problems of heat and light stability in polyamides because such systems suffer from a number of disadvantages as shown below.

Under certain conditions, copper salts have a tendency to form insoluble precipitates which clog filters and fiber spinnerets (see, e.g., U.S. patents 2,960,498 and 3,359,235). In addition, metallic copper occasioned by disproportionation can "plate out" on metal surfaces which are in contact with the copper-containing polyamide. Furthermore, not only are copper salts hygroscopic, making handling and storage difficult, but such salts also are water soluble and may be removed from the polyamide during leaching, aqueous scouring of fiber, or during end-use (see, e.g., U.S. patent 4,745,006). Polyamides commonly contain additional additives including, *inter alia*, dyes, pigments and ultraviolet absorbers. Copper salts also have a tendency to form complexes with certain dyes and pigments, making it difficult to obtain desired color tones (see, e.g., UK patent 1,148,244). Moreover, copper salts can produce excessive discoloration when used in combination with common ultraviolet absorbers (e.g., o-hydroxyphenylbenzotriazoles).

U.S. patent 3,499,867 issued to Nakamura et al. describes polyamide compositions comprising an aliphatic or aromatic polyamide and from about 0.001 to about 1% by weight of a pre-formed copper complex prepared by heating a divalent copper salt at a temperature of from 100 to 140°C with a lactam moiety having from 5 to about 12 carbon atoms or an amino-saturated aliphatic carboxylic acid containing from about 5 to about 12 carbon atoms. The polyamide compositions described by Nakamura et al. are reported to have improved thermal stability.

Plischke et al., in U.S. patent 4,851,466, teach a process for stabilizing nylon 66, poly(hexamethylene adipamide), which comprises conducting the polymerization in the presence of cupric amino-hydroxide or cupric ammonium carbonate. Shaped articles produced from the poly(hexamethylene adipamide) polymers prepared by the process of Plischke et al. are reported to be stabilized against deterioration otherwise caused by heat and/or sun light.

There continues to be a need for stabilization systems for polyamides containing copper salts that do not exhibit the above noted disadvantages.

## Summary of the Invention

The present invention addresses the above-noted and other disadvantages by providing polymer compositions which comprise (A) at least one polyamide and (B) the reaction product of (B-i) at least one copper salt; and (B-ii) at least one organic metal complexing agent, other than a polyamide or a monomer thereof. These reaction products show an ability to stabilize polyamides against radiation damage and thermal degradation.

The invention also contemplates a process for stabilizing polyamides (A) against radiation damage and thermal degradation, which comprises adding an effective stabilizing amount of (B) the reaction product of (B-i) at least one copper salt; and (B-ii) at least one organic metal complexing agent, other than a polyamide or a monomer thereof, to a polymer composition containing (A) at least one polyamide.

It is not certain whether any or all of the components in these compositions interact chemically upon blending. Therefore, the present invention contemplates compositions comprising said components and any reaction products thereof, as well as other optional components described hereinafter.

## Detailed Description of the Invention

The present invention pertains to a polymer composition comprising (A) at least one polyamide and (B) an effective stabilizing amount of the reaction product of (B-i) at least one copper salt; and (B-ii) at least one

organic metal complexing agent, other than a polyamide or a monomer thereof.

Typically, about 0.1 to about 2.0 moles of (B-i) are reacted with each mole of (B-ii) to obtain the reaction product (B). The reaction product (B) thus produced is incorporated into the polyamide containing polymer composition in an amount sufficient to give a total concentration of copper of from about 1 to about 500 ppm and, more often, from about 10 to about 150 parts of copper per million parts of the polymer composition. In another embodiment, the total concentration of copper will be from about 1 to about 500 ppm and, more often, from about 10 to about 150 parts of copper per million parts of the polyamide phase of the polymer composition.

(B-i) Copper Salt

Copper salts which are useful in the invention include both cuprous and cupric salts of inorganic and organic acids, as well as mixtures of one or more thereof. Useful salts can be in anhydrous form. Of interest are also salts in hydrated form. In one embodiment, the copper salt (B-i) includes a copper salt of an alkanoic acid such as acetic, butyric, lauric, palmitic, stearic, and the like. Other copper salts of organic anions useful herein include the citrate, lactate, oleate, oxalate, tartrate, benzoate, salicylate and like salts of copper. Illustrative inorganic anions for copper include chloride, bromide, iodide, nitrate, and the like.

Specific copper salts (i) useful in the invention are copper (I) chloride, copper (I) bromide, copper (I) iodide, copper (II) acetate, copper (II) chloride, copper (II) bromide, copper (II) nitrate, copper (II) sulfate and mixtures of one or more thereof.

(B-ii) Organic Metal Complexing Agents

The reaction products (B) of the present invention use (B-ii) at least one organic metal complexing agent. In one embodiment, the organic metal complexing agent is other than a polyamide or a monomer thereof, including lactams, amino acids or diamines, and is selected from the group consisting of N-monoacylhydrazine derivatives, N,N'-diacylhydrazine derivatives, tetrazole derivatives, oxalic acid derivatives, triazole derivatives, and mixtures of one or more thereof.

The term "organic metal complexing agent" is used in the specification and the appended claims in its art-accepted generic sense to refer to organic materials that operate as chelators, metal passivators, and/or metal deactivators for cuprous or cupric ion. Such materials are described, for example, in Kirk-Othmer, *Encyclopedia of Chemical Technology* Third ed. (1979) Vol. 5, "Chelating Agents", pp. 339-368 and Vol. 6, "Coordination Compounds", pp. 784-797 which each are fully incorporated by reference herein.

Examples for N-monoacylhydrazine derivatives are, inter alia, compounds represented by the formula I'

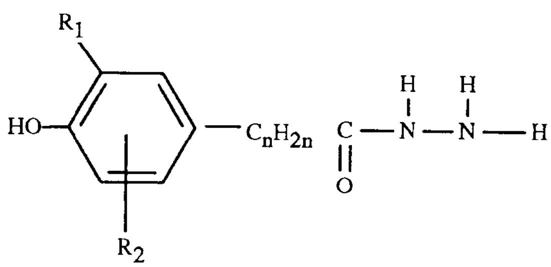

(I')

wherein $R_1$ is a lower alkyl group containing from 1 to about 6 carbon atoms; $R_2$ is hydrogen or a lower alkyl group containing from 1 to about 6 carbon atoms; and n is a number from 0 to about 5; another example is N-salicylal-N'-salicyloylhydrazine.

In a preferred embodiment, the organic metal complexing agents are selected from the group consisting of (B-ii.1) N,N'-diacylhydrazine derivatives, (B-ii.2) tetrazole derivatives, (B-ii.3) oxalic acid derivatives and mixtures of one or more thereof.

Specific examples of such organic metal complexing agents include, for example, N-salicylal-N'-salicyloylhydrazine, N,N'-bis-salicyloylhydrazine, N,N'-bis-(3,5-di-tert-butyl-4-hydroxyphenylpropionyl)-hydrazine, N,N'-diphenyloxalic acid diamide and bis-benzylidene-oxalic acid dihydrazide.

A particularly suitable class of organic metal complexing agents (B-ii.1) useful in the practice of the invention are alkylhydroxyphenylalkanoyl-hydrazine compounds represented by the formula I

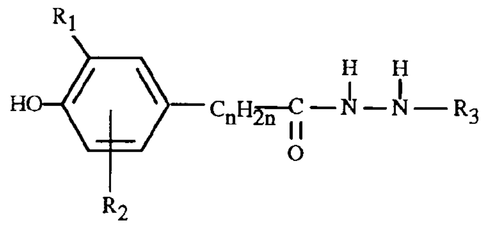

(I)

wherein $R_1$ is a lower alkyl group containing from 1 to about 6 carbon atoms; $R_2$ is hydrogen or a lower alkyl group containing from 1 to about 6 carbon atoms; $R_3$ is hydrogen, an alkanoyl group containing 2 to about 18 carbon atoms or a group represented by the formula II

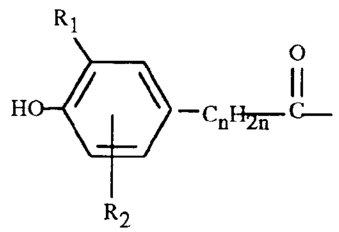

(II)

and n is a number from 0 to about 5. In one embodiment, $R_1$ and $R_2$ each are t-butyl groups ortho to the hydroxyl group, $R_3$ is a moiety of formula II and n is 2.

The alkylhydroxyphenylalkanoyl compounds of the formula I may be prepared, for example, by reacting hydrazine and an ester of an alkylhydroxyphenylalkanoic acid, as disclosed in U.S. patents 3,660,438 and 3,773,722 which each are fully incorporated by reference herein. Suitable alkylhydroxyphenylalkanoyl-hydrazines are commercially available under the general trade designation IRGANOX® (e.g., IRGANOX® MD-1024) available from CIBA-GEIGY Corporation.

In another embodiment, the organic metal complexing agent is (B-ii.2) a tetrazole compound represented by the formula III

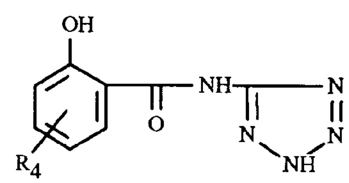

(III)

wherein $R_4$ is hydrogen or a lower alkyl group containing from 1 to about 6 carbon atoms. In one embodiment, $R_4$ is preferably hydrogen. The tetrazole compounds of formula III may be prepared by known methods including the reaction of salicylic acid with 5-aminotetrazole in the presence of a dehydrating agent as disclosed, for example, in Ger. Offen. 2,749,518. Suitable tetrazole derivatives are commercially available under the general trade designation MARK® CDA-1 available from Adeka Argus Chemical Co., Ltd. Japan.

In another embodiment, the organic metal complexing agent is (B-ii.3) an oxalic acid derivative represented by the following formula IV

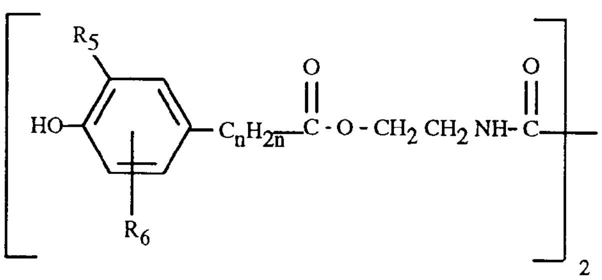

(IV)

wherein $R_5$ is a lower alkyl group containing from 1 to about 6 carbon atoms; $R_5$ is hydrogen or a lower alkyl group containing from 1 to about 6 carbon atoms; and n is a number from 0 to about 5. In one embodiment, $R_5$ and $R_6$ each are t-butyl groups ortho to the hydroxyl group and n is 2. The oxalic acid derivatives of formula IV may be prepared by known methods including the reaction of N,N'-bis(2-hydroxyethyl)oxamide with an acid chloride or an ester of an alkylhydroxyphenylalkanoic acid as disclosed, for example, in U.S. Patent 4,145,556. Suitable oxalic acid derivatives are commercially available under the general trade designation NAUGARD® XL-1 available from Uniroyal Chemical Co., Ltd.

As other suitable organic metal complexing agents can be mentioned, for example, triazole derivatives, such as triazoles and triazoles fused with benzene rings like benzotriazoles and derivatives thereof, tolutriazole and derivatives thereof; especially preferred are 3-salicyloylamino-1,2,4-triazole, di(2-ethylhexyl)-aminomethyltolutriazole, 2-mercaptobenzothiazole, 5,5'-methylene-bis-benzotriazole, 4,5,6,7-tetrahydrobenzotriazole, salicyclidene-propylene-diamine and salicyclamino-guanidine and salts thereof, 1,2,4-triazole and N,N'-disubstituted aminomethyl triazoles represented by formula V

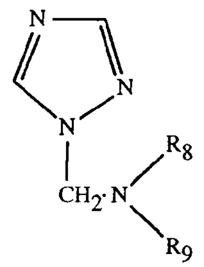

(V)

in which $R_8$ and $R_9$ are, independently, $C_1$-$C_{20}$alkyl, $C_3$-$C_{20}$alkenyl, or hydroxyethyl, obtained by reacting 1,2,4-triazole with formaldehyde and an amine $HNR_8R_9$, as disclosed in European Patent Application No. 160620; and the Mannich reaction products derived from benzotriazole or tolutriazole, formaldehyde and an amine $HNR_8R_9$, as disclosed in US patent No. 4,177,155, having the formula VI

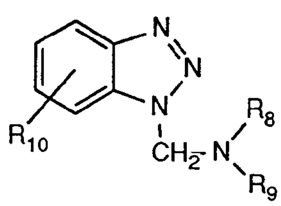

(VI)

in which $R_5$ and $R_9$ are as defined above, and $R_{10}$ is hydrogen or methyl.

(B) The Reaction Product

While it is not desired to be bound to any particular theory, the reaction product of (B-i) at least one copper salt; and (B-ii) at least one organic metal complexing agent (other than a polyamide or a monomer thereof) is believed to be a coordination compound in which cuprous or cupric ion combines by coordinate bonding with donor atoms in the organic metal complexing agent to form a structure referred to as a "complex".

The resulting reaction product "complex" (B) is effective to stabilize polymer compositions containing at least one polyamide against damage otherwise occasioned by radiation such as UV or natural sun light and damage caused by heat.

In general, the reaction product (B) will be most effective when it is present in the polyamide containing composition in an amount sufficient to give a total concentration of copper of from at least about 1 part per million parts of the polyamide containing composition, and may be present in amounts which yield copper concentrations of up to about 500 ppm or more. Typically, the complex (B) will be present in the polyamide containing composition in an amount sufficient to give a total concentration of copper of from at least about 10 ppm and up to about 150 ppm, especially 100 ppm. In a preferred embodiement, the complex (B) will be present in the composition in an amount sufficient to give a total concentration of copper from 10 parts to about 150 parts per million parts of the polyamide phase of the polymer composition.

The reaction product (B) can be readily obtained according to methods which are known per se. In one embodiment, the addition of a solution of a copper salt (B-i) to a solution of the metal complexing agent (B-ii),

or vice-versa, produces the product (B) as an insoluble precipitate. Useful solvents include methanol, ethanol, acetone, and mixtures thereof.

When necessary, a non-solvent such as water, toluene, xylene and the like may be added to give complete precipitation of the complex. The complex (B) is recovered by conventional operations such as combining the crude complex/reactant mixture, as a solid or in solution, with a diluent which is a non-solvent for said complex (B). As noted above, illustrative non-solvents include water, toluene, xylene and the like. Water is a particularly preferred non-solvent. Recovery of the resulting complex precipitate (B) can be effected by separating the same from the diluent by known methods such as vacuum filtration.

In another embodiment, the reaction product (B) is generated *in situ* via:

(1) melt compounding a mixture of a polyamide, at least one copper salt (B-i) and at least one organic metal complexing agent (B-ii);

(2) melt compounding a mixture of a polyamide containing at least one copper salt (B-i) with at least one organic metal complexing agent (B-ii); or

(3) melt compounding a mixture of a polyamide containing at least one organic metal complexing agent (B-ii) with at least one copper salt (B-i).

Melt compounding techniques and conditions are well known in the art. Specific conditions suitable for preparing the polymer composition of the present invention are described, for example, in *Modern Plastics* 68(11), 1991, pp. 238-240 and 391-398, which is fully incorporated by reference herein.

In another embodiment, the reaction product (B) is generated *in situ* during melt polymerization of a mixture of appropriate polyamide monomers along with at least one copper salt (B-i) and at least one organic metal complexing agent (B-ii). Melt polymerization techniques are well known in the art. Suitable procedures for preparing the polymer composition of the present invention via melt polymerization are described, for example, in *Comprehensive Polymer Science*, Vol. 5, Chapters 21-22 (pp. 357-386), Pergamon Press, (1989), which is fully incorporated by reference herein.

The molar ratio of the copper salt (B-i) to organic metal complexing agent (ii) in the reaction may be varied considerably, for example, from about 2:1 to about 1:10. When complexes are prepared and isolated, typically molar ratios of from about 1:1 to about 1:2 are employed, i.e. about 0.5 to about 1.0 moles of (B-i) are reacted with each mole of (B-ii). When other preparative methods are used which do not involve isolation (e.g., melt compounding or melt polymerization), the use of an excess of the organic metal complexing agent (B-ii) is desirable to ensure complete complexation of the copper salt (B-i).

The reaction product (B) of the instant invention can be incorporated into the polymer composition by conventional techniques, at any convenient stage prior to the manufacture of fibers and/or shaped articles therefrom. For example, the reaction product (B) may be incorporated along with the polyamide monomers at the start of polymerization or added at any time during the polymerization. In addition, the reaction product (B) can be added to the polymer composition in dry powder form, or a suspension or emulsion of the reaction product (B) may be mixed with a solution, suspension, or emulsion of the polymer. Alternatively, as noted above, the reaction product (B) may be prepared *in situ* during polymerization or subsequent melt processing of the polymer composition.

Especially preferred is a composition comprising (A) at least one polyamide and (B) the reaction product of (B-i) at least one copper salt; and (B-ii) at least one compound represented by the formula I

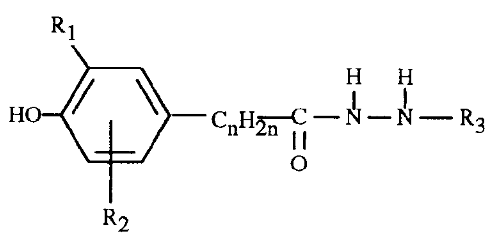
(I)

wherein $R_1$ is a lower alkyl group containing from 1 to 6 carbon atoms; $R_2$ is hydrogen or a lower alkyl group containing from 1 to 6 carbon atoms; $R_3$ is hydrogen, an alkanoyl group containing 2 to 18 carbon atoms or a group represented by the formula II

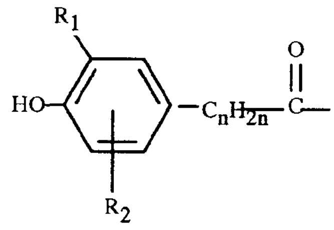 (II)

and n is a number from 0 to about 5;
wherein (B) is present in the composition in an amount sufficient to provide a total concentration of from about 1 to about 500 parts of copper per million parts of the composition.

(C) Alkali Metal Halides

It is within the scope of the present invention to optionally include at least one alkali metal halide (C) in the polymer compositions. Suitable materials include salts of group Ia alkali metals (e.g., lithium, sodium, potassium, etc.) with group VIIa halogens (e.g., fluorine, chlorine, bromine and iodine, etc.), such as potassium iodide, potassium bromide, potassium chloride, sodium iodide, sodium bromide, sodium chloride and mixtures of one or more thereof. In general, when present, the polymer compositions will contain from about 100 to about 10,000 ppm of at least one alkali metal halide and, more often, from about 500 to about 2000 ppm. Of the alkali metal halides, there can be mentioned potassium iodide and potassium bromide as preferred materials.

(D) Other Components

The polymer compositions of the invention also will optionally contain from zero to about 5% by weight, e.g. from 0.01 to 5% by weight, preferably from about 0.025 to about 2%, and especially from about 0.1 to about 1% by weight of various costabilizers or other conventional additives, such as the materials listed below, or mixtures thereof.

(D-1) UV absorbers and light stabilizers

(D-1).1 - 2-(2'-Hydroxyphenyl)-benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)-phenyl)benzotriazole, 2-(3'-tert-butyl-2'-hydroxy-5'-(2-octyloxycarbonylethyl)-phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300;

$$[R\text{-}CH_2CH_2\text{-}COO(CH_2)_3]_2 ,$$

where R = 3'-tert-butyl-4'-hydroxy-5'-2H-benzotriazol-2-ylphenyl.
(D-1).2 - 2-Hydroxy-benzophenones, for example, the 4-hydroxy-, 4-methoxy-, 4-octoxy, 4-decyloxy-, 4-dodecyloxy-, 4-benzyloxy, 4,2',4'-trihydroxy- and 2'-hydroxy-4,4'-dimethoxy derivatives, and 1,6-bis[3-hydroxy-4-benzoylphenoxy]hexane and related compounds such as 3,3'-methylene-bis[2-hydroxy-4-methoxybenzophenone].
(D-1).3 - Esters of optionally substituted benzoic acids, as for example 4-tert-butyl-phenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

(D-1).4 - Acrylates, for example, α-cyano-β,β-diphenylacrylic acid ethyl ester or isooctyl ester, α-carbomethoxy-cinnamic acid methyl ester, α-cyano-β-methyl-p- methoxy-cinnamic acid methyl ester or butyl ester, α-carbomethoxy-p-methoxy- cinnamic acid methyl ester, N-(β-carbomethoxy-β-cyanovinyl)-2-methylindoline.

(D-1).5 - Nickel compounds, although nickel compounds do not generally survive processing in polyamides, such materials can be employed under certain processing conditions. For example, nickel complexes of 2,2'-thio-bis-[4-(1,1,3,3-tetramethylbutyl)-phenol], such as the 1:1 or 1:2 complex, optionally with additional ligands such as n-butylamine, triethanolamine or N-cyclohexyldiethanolamine, nickel dibutyldithiocarbamate, nickel salts of 4-hydroxy-3,5-di-tert-butylbenzylphosphonic acid monoalkyl esters, such as of the methyl, ethyl or butyl ester, nickel complexes of ketoximes such as of 2-hydroxy-4-methyl-phenyl undecyl ketoxime, nickel complexes of 1-phenyl-4-lauroyl-5-hydroxy-pyrazole, optionally with additional ligands.

(D-1).6 - Sterically hindered amines, for example bis(2,2,6,6-tetramethyl-piperidyl)sebacate, bis(2,2,6,6-tetramethyl-piperidyl)succinate, bis(1,2,2,6,6-pentamethylpiperidyl)sebacate, bis(1,2,2,6,6-pentamethylpiperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, the condensate of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4-piperidyl)-1,2,3,4-butane-tetracarboxylate, 1,1'-(1,2-ethanediyl)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazasprio[4.5]decan-2,4-dion, bis(1-octyloxy-2,2,6,6-tetramethylpiperidyl)sebacate, bis(1-octyloxy-2,2,6,6-tetramethylpiperidyl)succinate, the condensate of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis-(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione.

(D-1).7 - Oxalic acid diamides, for example, 4,4'-di-octyloxy-oxanilide, 2,2'-dioctyloxy-5,5'-di-tert-butyloxanilide, 2,2'-di-dodecyloxy-5,5'-di-tert-butyloxanilide, 2-ethoxy-2'-ethyl-oxanilide, N,N'-bis (3-dimethylaminopropyl)-oxalamide, 2-ethoxy-5-tert-butyl-2'-ethyloxanilide and its mixture with 2-ethoxy-2'-ethyl-5,4'-di-tert-butyloxanilide and mixtures of ortho- and para-methoxy- as well as of o- and p-ethoxy-disubstituted oxanilides.

(D-1).8 - Hydroxyphenyl-s-triazines, for example 2,6-bis-(2,4-dimethylphenyl)-4-(2-hydroxy-4-octyloxyphenyl)-s-triazine; 2,6-bis-(2,4-dimethylphenyl)-4-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxyethoxy)phenyl]-6-(4-chlorophenyl)-s-triazine; 2,4-bis[2-hydroxy-4-(2-hydroxy-4-(2-hydroxyethoxy)phenyl]-6-(2,4-dimethylphenyl)-s-triazine; 2,4-bis[2-hydroxy-4-(2-hydroxyethoxy)phenyl]-6-(4-bromophenyl)-s-triazine; 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine, 2,6-diphenyl-4-(2-hydroxy-4-alkoxyphenyl)-s-triazines e.g., 2,6-diphenyl-4-(2-hydroxy-4-hexyloxyphenyl)-s-triazine or 2,6-diphenyl-4-(2-hydroxy-4-methoxyphenyl)-s-triazine and 2,6-bis(4-methylphenyl)-4-(2-hydroxy-4-alkoxyphenyl)-s-triazines.

(D-2) Light Screeners

For example, calcium carbonate, silicates, glass fibers, asbestos, talc, kaolin, mica, barium sulfate, metal oxides and hydroxides, carbon black, graphite, pigments, etc.

In one embodiment, of the fillers described in (D-2) (e.g. glass fibers, calcium carbonate, talc, etc.) are added at levels up to about 50% by weight of the polymer composition.

(D-3) Antioxidants

(D-3).1 - Alkylated Monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

(D-3).2 - Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.

(D-3).3 - Hydroxylated Thiodiphenylethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis-(2,6-dimethyl-4-hydroxyphenyl) disulfide.

(D-3).4 - Alkylidene-Bisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonyl- phenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.

(D-3).5 - Benzyl Compounds

1,3,5-Tri-(3,5-di-tert-butyl-4-hydroxybenzyl)-2,4,6-trimethyl-benzene, bis(3,5-di-tert-butyl-4-hydroxybenzyl)-sulfide, 3,5-di-tert-butyl-4-hydroxybenzylmercaptoacetic acid-isooctylester, bis-(4-tert-butyl-3-hydroxy-2,6-dimethyl benzyl)dithiolterephthalate, 1,3,5-tris-(3,5-di-tert-butyl-4-hydroxybenzyl)-isocyanurate, 1,3,5-tris-(4-tert-butyl-3-hydroxy-2,6-dimethylbenzyl)-isocyanurate, 3,5-di-tert-butyl-4-hydroxybenzyl-phosphonic acid-dioctadecylester, 3,5-di-tert-butyl-4-hydroxybenzyl-phosphonic acid-monoethylester, calcium-salt.

(D-3).6 - Acylaminophenols

4-Hydroxy-lauric acid anilide, 4-hydroxy-stearic acid anilide, 2,4-bis-octylmercapto-6-(3,5-di-tert-butyl-4-hydroxyanilino)-s-triazine, N-(3,5-di-tert-butyl-4-hydroxyphenyl)-carbamic acid octyl ester.

(D-3).7 - Esters of β-(3,5-Di-tert-butyl-4-hydroxyphenyl)-propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris-(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

(D-3).8 - Esters of β-(5-tert-butyl-4-hydroxy-3-methylphenyl)-propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris-(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

(D-3).9 - Amides of β-(3.5-Di-tert-butyl-4-hydroxyphenyl)-propionic acid for example

N,N'-Bis-(3,5-di-tert-butyl-4-hydroxyphenylpropionyl)-hexamethylene-diamine, N,N'-bis-(3,5-di-tert-butyl-4-hydroxy-phenylpropionyl)-trimethylene-diamine, N,N'-bis(3,5-di-tert-butyl-4-hydroxyphenylpropionyl)-hydrazine.

(D-3).10 - Amine antioxidants

N,N'-Di-isopropyl-p-phenylenediamine, N,N'-di-sec.-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclo-hexyl-p-phenylenediamine, N,N'-diphenyl-p-phenylenediamine, N,N'-di-(naphthyl-2-)-p-phenylenediamine, N-isopropyl-N'-phenyl-p-phenylenediamine, N-(1,3-dimethyl-butyl)-N'-phenyl-p-phenylenediamine, N-(1-methylheptyl)-N'-phenyl-p-phenylene-diamine, N-cyclohexyl-N'-phenyl-p-phenylenediamine, 4-(p-toluene-sulfonamido)-diphenylamine, N,N'-dimethyl-N,N'-di-sec-butyl-p-phenylenediamine, di-phenylamine, N-allyldiphenylamine, 4-isopropoxy-diphenylamine, N-phenyl-1-naphthylamine, N-phenyl-2-naphthylamine, octylated diphenylamine, e.g. p,p'-di-tert-octyldiphenylamine, 4-n-butylaminophenol, 4-butyrylamino-phenol, 4-nonanoylamino-phenol, 4-dodecanoyl-amino-phenol, 4-octadecanoyl-amino-phenol, di-(4-methoxyphenyl)-amine, 2,6-di-tert-butyl-4-dimethyl-amino-methyl-phenol, 2,4'-diamino-diphenylmethane, 4,4'-diamino-diphenyl-methane, N,N,N',N'-tetramethyl-4,4'-diamino-diphenylmethane, 1,2-di-(phenyl-amino)-ethane, 1,2-di-[2-methyl-phenyl)-amino]-ethane, 1,3-di-(phenylamino)-propane, (o-tolyl)-biguanide, di-[4-1',3'-dimethyl-butyl)-phenyl]amine, tert-octylated N-phenyl-1-naphthylamine, mixture of mono- and dialkylated tert-butyl-/tert-octyldiphenylamines, 2,3-dihydro-3,3-dimethyl-4H- 1 ,4-benzothiazine, phenothiazine, N-allylphenothiazine, tert-octylated phenothiazine, 3,7-di-tert-octylphenothiazine, and styrenated diphenylamine (i.e., 4,4'-bis(alpha,alpha-dimethylbenzyl)diphenylamine).

(D-3).11 - Secondary antioxidants

a) - Aliphatic or aromatic phosphites and phosphonites, for example, triphenyl phosphite, diphenylalkyl phosphites, phenyldialkyl phosphites, tri-(nonylphenyl) phosphite, trilauryl phosphite, trioctadecyl phosphite, di-stearyl-pentaerythritol diphosphite, tris-(2,4-di-tert-butylphenyl) phosphite, di-isodecylpentaerythritol diphosphite, di-(2,4-di-tert-butylphenyl)pentaerythritol diphosphite, tristearylsorbitol triphosphite, tetrakis-(2,4-di-tert-butylphenyl) 4,4'-diphenylylenediphosphonite.

b) - Esters of thiodipropionic acid or of thiodiacetic acid, or salts of dithiocarbamic or dithiophosphoric acid.

c) - Other secondary antioxidants commonly used in polyamides include alkali metal salts of phenylphosphinic acid and alkali metal hypophosphites.

The polymeric compositions of the present invention may contain one or more conventional additives and/or fillers of the types used in the polymer art. Such materials may be included in the polymer compositions of the present invention to modify or to obtain desirable properties. Such conventional additives for include, for example, compatiblizers, plasticizers, lubricants, emulsifiers, pigments, optical brighteners, flameproofing agents, anti-static agents, blowing agents and thiosynergists as noted above.

Polymeric components

The polyamide compositions of the present invention contain at least one polyamide (A). The present invention contemplates polymer compositions wherein at least one polyamide (A) is not the major component as well as polymer compositions wherein at least one polyamide (A) is the principal component. In one embodiment, at least one polyamide (A) will be present in the polymer composition in a major amount (i.e., an amount greater that 50% by weight based on the entire composition). In another embodiment, at least one polyamide (A) will be present in an amount from about 60% to about 80% by weight based on the entire composition. In yet another embodiment, at least one polyamide (A) will be present in the polymer composition in an amount of from about 90% by weight or more based on the entire composition.

Polyamides constitute a class of well known engineering resins which are defined as condensation products that contain recurring amide groups as the primary part of the main polymer chains. Polyamides can be obtained according to known methods and many are available commercially. For example, polyamides can be formed from either polyaddition or polycondensation of bifunctional monomers. In the former, the polymerization of monomeric substances such as lactams require the opening of the ring structure and subsequent linear chain growth to the desired molecular weight. In polycondensation, diamines and diacids are reacted with consequent formation of water and a polymer.

The polyamides contemplated by the present invention include symmetrical, nonsymmetrical, semicrystalline and amorphous or transparent polyamides; as well as polyamide polymer blends which contain multiple polyamides and/or copolyamides.

Specific examples of the polyamides useful in the practice of the present invention are described in Kirk-Othmer *Encyclopedia of Chemical Technology* Third ed. (1979) Vol. 18, pp. 328-436, incorporated by reference herein for its disclosures relating to polyamides.

In one aspect, the structural formulae of the polyamides useful in the practice of the present invention may be represented as:

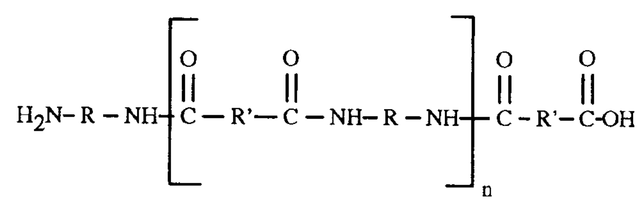

or, in the case of self-condensation of an amino acid, as:

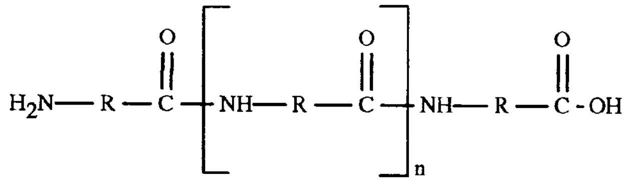

where R and R' represent chains between functional groups in the monomers and n represents the degree of polymerization or number of recurring groups in the polymer chain.

Numerous combinations of diacids, diamines and amino acids or the corresponding lactams can be used to prepare the polyamides. The chains R and R' between the functional groups in the bifunctional monomers may comprise linear or branched aliphatic hydrocarbons, alicyclic or aromatic rings and also may contain various hetero atoms such as oxygen, sulfur and nitrogen.

In one embodiment, the polyamide resins are produced by condensation of equimolar amounts of: (1) a saturated dicarboxylic acid containing from 1 to 12 carbon atoms; with (2) a diamine that contains up to about 16 carbon atoms.

Suitable dicarboxylic acids include carbonic acid, oxalic acid, glutaric acid, adipic acid, pimelic acid, suberic acid, azelaic acid, sebacic acid and dodecanedioic acid.

Suitable diamines include hydrazine, ethylenediamine, hexamethylenediamine, 1,8-octanediamine, piperazine, tetramethylenediamine, pentamethylenediamine, octamethylenediamine, decamethylenediamine, hexadecamethylenediamine and aromatic amines such as p-phenylenediamine and 4,4'-diaminodiphenylsulfone.

Alternatively, the dicarboxylic acids utilized to form the nylons may be aromatic dicarboxylic acids such as isophthalic acid or terephthalic acid.

Specific polyamides and copolyamides which are derived from diamines and dicarboxylic acids and/or from aminocarboxylic acids or the corresponding lactams include: polyamide 4, polyamide 6, polyamide-4,6, polyamide 6/6, 6/10, 11, 12, poly-2,4,4-trimethylhexamethylene terephthalamide, poly-p-phenylene terephthalamide or poly-m-phenylene isophthalamide, as well as copolymers thereof with two or more of the above polymers or terpolymerization of the above polymers or their components, for example, nylon-6/nylon-66 and nylon-6/nylon-12. Also mentioned are poly(hexamethylene terephthalamide) and poly(hexamethylene isophthalamide).

It is within the scope of the invention to include non-polyamide polymers in the polymer compositions providing that at least one polyamide (A) is present in the composition. Suitable polymers include polyolefins such as high density polyethylene (HDPE), low density polyethylene (LDPE), linear low density polyethylene (LLDPE), homo- and co-polymer polypropylenes, ethylene/vinyl acetate copolymer (EVA) and the like; styrene based materials such as crystal polystyrene, general purpose polystyrene (GPPS), medium impact polystyrene (MIPS), high impact polystyrene (HIPS) and the like; styrene-acrylonitrile copolymers (SAN); acrylonitrile-butadiene-styrene copolymers (ABS); polyphenylene ethers (PPO); polycarbonates (PC); polyvinyl chloride (PVC), polyvinyl acetal based materials, polyethylene terephthalate (PET), polybutylene terephthalate (PBT) and the like, etc. In one embodiment, such non-polyamides, when present, are present in minor amounts (i.e., less than 50% by weight based on the entire composition) in the polyamide polymer compositions of the present invention.

## Blending Techniques

The polymer compositions of the present invention including at least one polyamide (A), the reaction product (B), optionally at least one alkali metal halide (C), and other optional additives and/or fillers can be prepared by melt blending techniques well-known to those skilled in the art.

A blending method which results in the formation of an intimate blend of the components is preferred. Suitable procedures include solution blending and melt blending. A particularly useful procedure is to intimately mix the polymers using conventional mixing equipment such as a mill, a Banbury mixer, a Brabender Torque Rheometer, a single or twin screw extruder, continuous mixers, kneaders, etc. For example, the components may be intimately mixed in the form of granules and/or powder in a high shear mixer.

One preferred process involves: dry blending of the polyamide (A), the copper salt (B-i), and the chelating agent (B-ii) followed by extrusion (single-screw extruder or the like) to obtain the polymer composition of the present invention.

"Intimate" mixing means that the mixture is prepared with sufficient mechanical shear and thermal energy to produce a dispersed phase which is finely divided and homogeneously dispersed in the continuous or principal phase.

Thus, in another of its aspects the present invention relates to methods for stabilizing polyamides against radiation damage and thermal degradation, which comprises adding an effective stabilizing amount of (B) the reaction product of (B-i) at least one copper salt; and (B-ii) at least one organic metal complexing agent selected from the group consisting of N-monoacylhydrazine derivatives, N,N'-diacylhydrazine derivatives, tetrazole derivatives, and oxalic acid derivatives, to a polymer composition containing at least one polyamide (A). In accordance with the present invention, an effective amount of the reaction product (B) is usually an amount sufficient to provide at least about 1 ppm copper in the composition, and may be an amount sufficient to provide up to about 500 ppm copper or more in the composition. In one embodiment, the reaction product (B) is present in the composition in amount sufficient to provide from about 1 to about 500 ppm copper and more often, from about 10 to about 150 ppm copper, in the polyamide phase of a polyamide containing composition which may, as noted above, contain other non-polyamide polymers. The polymer compositions of the present invention are characterized as having improved resistance to radiation and thermal degradation.

## EXAMPLES

In the following examples, as well as elsewhere in the specification and claims, parts are by weight, temperature is degrees Celsius and pressure is atmospheric, unless otherwise clearly indicated. While these examples are presented to show one skilled in the art how to operate within the scope of the invention, the examples are not to serve as a limitation on the scope of the invention since such scope is only defined in the appended claims.

### 1. Preparation of additive concentrates

The following examples illustrate the preparation of additive concentrates useful in preparing certain stabilized polyamide compositions according to the present invention.

### EXAMPLES 1-3

Additive concentrates are prepared from natural, unpigmented Nylon-6 pellets (fiber grade). The pellets are vacuum dried under nitrogen bleed for 48 hours at 115°C and then dry blended with one of the following additives:

- Organic metal complexer: IRGANOX® MD 1024 - an N,N'-diacylhydrazine metal deactivator available from Ciba-Geigy Corp.
- Light stabilizer 1: CHIMASSORB® 944 - a hindered amine light stabilizer available from Ciba-Geigy Corp.
- Light stabilizer 2: TINUVIN® 234 - a benzotriazole light stabilizer available from Ciba-Geigy Corp.

The dry blends are extruded on a laboratory single screw extruder (one inch D;L/D ratio=24:1) at 50 rpm with barrel segment set temperatures (Zone 1-3) of 175°, 205° and 260°. All extrudates are quenched in water, pelletized and vacuum dried under nitrogen billed for 48 hours at 115°C.

The particulars of the pelletized additive concentrates are summarized in Table 1 below.

TABLE 1

Pelletized Nylon-6 Additive Concentrates

| | Additive | Added % | Analyzed %* |
|---|---|---|---|
| Ex. 1 | metal complexer | 4 | 1.5 |
| Ex. 2 | light stabilizer 1 | 4 | 2.5 |
| Ex. 3 | light stabilizer 2 | 4 | 2.0 |

*Additives in final fiber based on analyzed %.

## 2. Preparation of polyamide fibers

### EXAMPLES 4-15

In the following examples, Nylon-6 pellets stabilized with 50 ppm copper (as copper (I) iodide) (fiber grade) are dry blended with selected amounts of the pelletized additive concentrates of examples 1-3 and/or a pelletized peryllene RED 3B 25% concentrate.

In example 4, a control blend is prepared from natural, unpigmented Nylon-6 pellets (no copper) (fiber grade) and a RED 3B control blend (no copper) is prepared in example 15.

In examples 5, 8 and 13 control blends are prepared from Nylon-6 pellets stabilized with 50 ppm copper (as copper (I) iodide) but containing no organic metal complexing agent.

The dry blends are spun into fiber (denier 10 - 15 g filament) with the following extrusion/spinning configuration:

Single screw extruder (one inch D;L/D ratio=24:1) at 10 rpm and barrel segment set temperatures (Zone 1-3) each at 250°;
pump (20 rpm), adapter and spinneret (30 round hole) each at 235°;
godet nos. 1-2 each at 80° and 120 & 360 m/min, respectively.

The amounts of the additives (weight percent) included in examples 4-15 are summarized in Table 2 below.

TABLE 2

| Ex. | Copper (ppm) | RED 3B% | Metal Complexer % | Light Stabilizer 1% | Light Stabilizer |
|---|---|---|---|---|---|
| 2% | | | | | |
| 4 | -.- | -.- | -.- | -.- | -.- |
| 5 | 50 | -.- | -.- | -.- | -.- |
| 6 | 50 | -.- | 0.25 | -.- | -.- |
| 7 | 50 | -.- | 0.50 | -.- | -.- |
| 8 | 50 | 0.50 | -.- | -.- | -.- |
| 9 | 50 | 0.50 | 0.25 | -.- | -.- |
| 10 | 50 | 0.50 | 0.50 | -.- | -.- |
| 11 | 50 | -.- | 0.25 | 0.25 | -.- |
| 12 | 50 | -.- | 0.25 | -.- | 0.25 |
| 13 | 50 | -.- | -.- | -.- | 0.25 |
| 14 | 50 | -.- | 0.20 | -.- | 0.25 |
| 15 | -.- | 0.50 | -.- | -.- | -.- |

## 3. Evaluation of polyamide fibers

### EXAMPLE 16

The light stability of the Nylon-6 fibers of examples 5-6 and 8-9 are evaluated in accordance with SAE-J1885 by exposure in a xenon arc weatherometer (Atlas C165) under interior automotive conditions (SAE J1885; 89°C, irradiance 0.55 W/m$^2$, 3.8 h light + 1 h dark cycle, CAM #60, quartz inner and borosilicate outer filters). Table 3 summarizes the results.

TABLE 3:

| Copper Stabilized Nylon 6 Fiber kJ/m² to Catastrophic Failure in Xenon Arc Weatherometer | | |
|---|---|---|
| Ex. | Nylon 6 | $kJ/m^2$ |
| 4 | Natural (no copper) | 250 |
| 5 | Natural (50 ppm Cu) | 3000 |
| 6 | Natural (50 ppm Cu) + 0.25% metal complexer | 2900 |
| 8 | Red 3B (0.5%) (50 ppm Cu) | 1900 |
| 9 | Red 3B (0.5%) (50 ppm Cu) + 0.25% metal complexer | 2400 |
| 15 | Red 3B (0.5%) | 250 |

The above data demonstrate that the copper complexes in accordance with the invention are effective light stabilizers in polyamide fibers.

EXAMPLE 17

The Nylon-6 fibers of examples 5-10 are exposed to boiling water for up to 48 hours. The amount of copper extracted from the fibers during exposure is summarized in Table 4 below.

TABLE 4:

| Extraction of Copper from Nylon 6 Fiber When Exposed to Boiling Water | | | | | |
|---|---|---|---|---|---|
| Ex. | Nylon-6 | Cu Extracted from Fiber (ppm) | | | |
| | | 7 Hr. | 24 Hr. | 31 Hr. | 48 Hr. |
| 5 | Natural (50 ppm Cu) | 6.9 | 9.2 | 16.0 | 29.0 |
| 6 | Natural (50 ppm Cu) + 0.25% metal complexer | <2.5 | 2.5 | 2.5 | 4.9 |
| 7 | Natural (50 ppm Cu) + 0.5% metal complexer | <2.5 | <2.5 | <2.5 | 24.0 |
| 8 | Red 3B (0.5%) (50 ppm Cu) | 3.1 | 4.6 | 5.9 | 24.0 |
| 9 | Red 3B (0.5%) (50 ppm Cu) + 0.25% metal complexer | <2.5 | <2.5 | <2.5 | 2.5 |
| 10 | Red 3B (0.5%) (50 ppm Cu) + 0.5% metal complexer | <2.5 | <2.5 | <2.5 | 3.4 |

2.5 ppm is lower limit of detection

The above data demonstrate that copper is rendered less extractable from polyamide fibers by incorporating copper as a complex.

EXAMPLE 18

The Nylon-6 fibers of examples 4-6 and 11-12 are exposed to boiling water for 24 hours following the procedure of example 17 and subsequently evaluated for light stability following the procedure of example 16. The results are summarized in Table 5 below.

TABLE 5

Light Stability of Copper Stabilized Nylon 6 Fiber After 24 Hour Exposure to Boiling Water

$kJ/m^2$ to Catastrophic Failure
in Xenon Arc Weatherometer

| Ex. | Nylon-6 | $kJ/m^2$ |
|---|---|---|
| 4 | Natural (no copper) | 700 |
| 5 | Natural (50 ppm Cu) | 700 |
| 6 | Natural (50 ppm Cu) + 0.25% metal complexer | 1240 |
| 11 | Natural (50 ppm Cu) + 0.25% metal complexer + 0.25% light stabilizer 1 | 1240 |
| 12 | Natural (50 ppm Cu) + 0.25% metal complexer + 0.25% light stabilizer 2 | 1690 |

The above data demonstrate the improved light stability of boiled polyamide fibers which are stabilized with a copper complex. This was not anticipated since uncomplexed copper typically is extracted by boiling.

EXAMPLE 19

The unexposed Nylon-6 fibers of examples 13-14 are wrapped around cards and evaluated for initial discoloration following ASTM-D1925. The results are summarized in Table 6 below.

TABLE 6

| Discoloration of Copper Stabilized Nylon 6 Fiber | | |
|---|---|---|
| Ex. | Nylon-6 | Yellowness Index |
| 13 | Natural (50 ppm Cu) + 0.25% light stabilizer 2 | 47.8 |
| 14 | Natural (50 ppm Cu) + 0.25% light stabilizer 2 + 0.20% metal complexer | 23.4 |

The above data demonstrate that complexed copper produces less discoloration in Nylon-6 than uncomplexed copper when used in combination with a benzotriazole ultraviolet light absorber.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

**Claims**

1. A stabilized polymer composition comprising: (A) at least one polyamide and (B) the reaction product of (B-i) at least one copper salt and (B-ii) at least one organic metal complexing agent selected from the group consisting of N-monoacylhydrazine derivatives, N,N'-diacylhydrazine derivatives, tetrazole derivatives,

oxalic acid derivatives, 3-salicyloylamino-1,2,4-triazole, di(2-ethylhexyl)-aminomethyltolutriazole, 2-mercaptobenzothiazole, 5,5'-methylene-bis-benzotriazole, 4,5,6,7-tetrahydrobenzo-triazole, salicyclidene-propylene-diamine and salicyclamino-guanidine and salts thereof, 1,2,4-triazole and N,N'-disubstituted aminomethyl triazoles represented by formula V

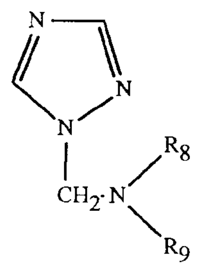

(V)

in which $R_8$ and $R_9$ are, independently, $C_1$-$C_{20}$alkyl, $C_3$-$C_{20}$alkenyl, or hydroxyethyl, and benzotriazoles or tolutriazoles represented by formula VI

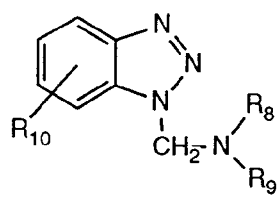

(VI)

in which $R_8$ and $R_9$ are as defined above, and $R_{10}$ is hydrogen or methyl, and mixtures of one or more thereof.

2. A composition according to claim 1, wherein the N-monoacylhydrazine derivative or N,N'-diacylhydrazine derivative is selected from the group consisting of N-salicylal-N'-salicyloylhydrazine, N,N'-bis-salicyloylhydrazine, N,N'-bis-(3,5-di-tert-butyl-4-hydroxyphenylpropionyl)-hydrazine, N,N'-diphenyloxalic acid diamide, bis-benzylidene-oxalic acid dihydrazide and mixtures of one or more thereof.

3. A composition according to claim 1, wherein the N-acylhydrazine derivative or N,N'-diacylhydrazine derivative and the compound of formula I' is at least one compound represented by the formula I:

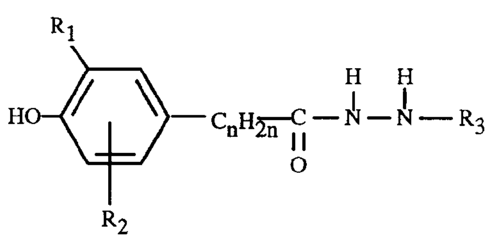

(I)

wherein $R_1$ is a lower alkyl group containing from 1 to 6 carbon atoms; $R_2$ is hydrogen or a lower alkyl group containing from 1 to 6 carbon atoms; $R_3$ is hydrogen, an alkanoyl group containing 2 to 18 carbon atoms or a group represented by the formula II

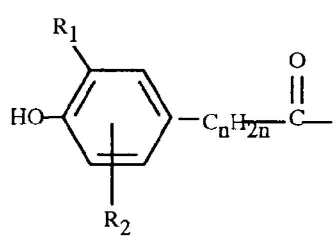

(II)

and n is a number from 0 to 5.

4. A composition according to claim 3, wherein $R_1$ and $R_2$ each are t-butyl groups ortho to the hydroxyl group, $R_3$ is a moiety of formula II and n is 2.

5. A composition according to claim 1, wherein the tetrazole derivative is at least one compound represented by the formula III:

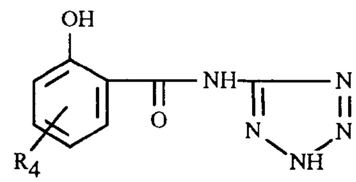

(III)

wherein $R_4$ is hydrogen or a lower alkyl group containing from 1 to 6 carbon atoms.

6. A composition according to claim 1, wherein the oxalic acid derivative is at least one compound represented by the formula IV:

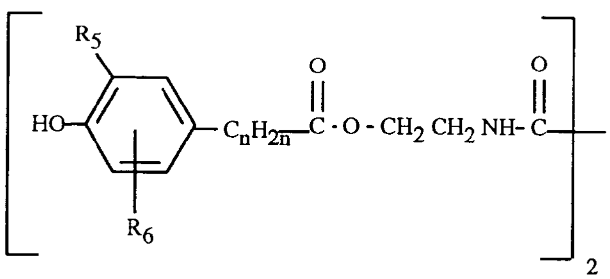

(IV)

wherein $R_5$ is a lower alkyl group containing from 1 to 6 carbon atoms; $R_5$ is hydrogen or a lower alkyl group containing from 1 to 6 carbon atoms; and n is a number from 0 to 5.

7. A composition according to claim 1, wherein 0.1 to 2.0 moles of (B-i) are reacted with each mole of (B-ii).

8. A composition according to claim 1, further comprising (C) at least one alkali metal halide.

9. A composition according to claim 1, further comprising from 0.01 to 5% by weight of (D) at least one costabilizer or other conventional additive of the type used in the polymer art, based on the total weight of the composition.

10. A composition according to claim 1, wherein the reaction product (B) is present in the composition in an amount sufficient to provide a total concentration of from 1 to 500 parts of copper per million parts of the polymer composition.

11. A composition according to claim 8, wherein the alkali metal halide (C) is present in the composition in an amount sufficient to provide a total concentration of from 100 to 10,000 parts of alkali metal halide per million parts of the polymer composition.

12. A composition according to claim 1, wherein the polyamide (A) is selected from the group consisting of polyamide 4, polyamide 6, polyamide-4,6, polyamide 6/6, 6/10, 11, 12, poly-2,4,4-trimethylhexamethylene terephthalamide, poly-p-phenylene terephthalamide or poly-m-phenylene isophthalamide, nylon-6/nylon-66, nylon-6/12, poly(hexamethylene terephthalamide), poly(hexamethylene isophthalamide), and mixtures of one or more thereof.

13. A composition according to claim 1, further comprising at least one non-polyamide polymer.

14. A composition according to claim 13, wherein the non-polyamide polymer is selected from the group consisting of high density polyethylene, low density polyethylene, linear low density polyethylene, homo- and co-polymer polypropylenes, ethylene/vinyl acetate crystal polystyrene, general purpose polystyrene, medium impact polystyrene, high impact polystyrene, styrene-acrylonitrile copolymers, acrylonitrile-butadiene-styrene copolymers, polyphenylene ethers, polycarbonates, polyvinyl chlorides, polyvinyl acetal based materials, polyethylene terephthalate, polybutylene terephthalate and mixtures of one or more thereof.

**15.** A process for stabilizing a polymer composition containing at least one polyamide (A) against radiation damage and thermal degradation, which comprises adding an effective stabilizing amount of (B) the reaction product of
(B-i) at least one copper salt; and
(B-ii) at least one organic metal complexing agent selected from the group consisting of N-monoacylhydrazine derivatives, N,N'-diacylhydrazine derivatives, tetrazole derivatives, and oxalic acid derivatives; or mixtures of one or more thereof, to a polymer composition containing at least one polyamide.

European Patent Office

# EUROPEAN SEARCH REPORT

Application Number
EP 94 81 0045

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | FR-A-2 082 345 (RHONE-POULENC)<br>--- | | C08K5/00<br>C08K5/3475<br>C08K5/3472 |
| A | GB-A-1 030 363 (KARL HEINZ SCHMIDT ET AL)<br>----- | | |
| | | | TECHNICAL FIELDS SEARCHED (Int.Cl.5) |
| | | | C08K |

The present search report has been drawn up for all claims

| Place of search | Date of completion of the search | Examiner |
|---|---|---|
| THE HAGUE | 16 May 1994 | Leroy, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)